# FASCICULE DE BREVET EUROPEEN

(11) **EP 1 491 384 B1**
(45) Date de publication et mention de la délivrance du brevet: **12.07.2006**
(21) Numéro de dépôt: 04300289.8
(22) Date de dépôt: 18.05.2004
(51) Int. Cl.: B60K 26/02

(54) **Système de génération de force de rappel variable pour pédale d'accélérateur**
System zur Erzeugung einer variablen Rückstellkraft für ein Gaspedal
System for generating a variable restoring force for an accelerator pedal

(30) Priorité: 28.05.2003 FR 0350192
(43) Date de publication de la demande: 29.12.2004
(73) Titulaire: Renault s.a.s., 92100 Boulogne Billancourt (FR)
(72) Inventeur: Salesse, Laurent, 91470 Les Molieres (FR)

(56) Documents cités:
- DD-A- 216 509
- DE-A- 3 232 160
- DE-A- 3 622 260
- DE-B- 1 138 326
- GB-A- 1 549 178
- US-A- 3 623 693

## Description

L'invention concerne un système pour générer une force sur une pédale de commande d'un organe de réglage de la puissance délivrée par un moteur thermique de véhicule automobile, comprenant un actionneur ; un mécanisme de transmission qui relie l'actionneur à l'organe de réglage de la puissance du moteur thermique pour exercer une force sur cet organe ; une unité de pilotage qui reçoit des informations pour asservir l'actionneur en fonction de la force à exercer sur la pédale de commande l'organe de réglage de la puissance délivrée par le moteur thermique, voir US-A-3 623 693.

Les moteurs des véhicules automobiles sont équipés d'un organe de réglage qui permet de contrôler leur puissance, généralement un volet papillon ou une pompe à injection. Cet organe de réglage est commandé par le conducteur au moyen d'une pédale appelée pédale d'accélérateur. Un ressort de rappel pousse la pédale d'accélérateur en position de ralenti lorsque le conducteur n'exerce aucune pression sur elle.

On connaît des systèmes pour générer une force de rappel sur la pédale d'accélérateur afin, notamment, de lui transmettre une information ou pour l'aider à respecter une limite de vitesse.

Le brevet WO 00/56 566 décrit un système de régulation de la vitesse d'un véhicule qui comprend-une unité de contrôle reliée à la pédale d'accélérateur. Cette unité peut passer d'une position dans laquelle la pédale d'accélérateur peut être actionnée sans difficulté et une position dans laquelle elle est difficile à actionner parce qu'une force de résistance générée par l'unité de contrôle doit être surmontée.

Le brevet WO 93/12 949 décrit un dispositif d'assistance au contrôle de la puissance d'un moteur de véhicule qui comprend une unité électronique de contrôle. Un servomoteur commandé par l'unité électronique déplace une biellette de manière à faire varier l'angle entre cette biellette et un ressort de rappel. La force de rappel exercée par le ressort est fonction de l'écart entre la vitesse réelle du véhicule automobile et la consigne de vitesse limite. Elle peut également être déterminée par une exigence de sécurité.

Toutefois, ces dispositifs connus présentent plusieurs inconvénients. Ils sont basés sur des mécanismes électromécaniques utilisant des ressorts. Outre leur complexité, leur coût de fabrication peut être élevé. Ils ne permettent ni de doser la force avec précision ni de la faire varier avec un faible temps de réaction. La présence du ressort dans la chaîne cinématique limite ou perturbe la restitution de forces variables dans le temps en introduisant des phénomènes transitoires. De plus, ils ne s'appliquent pas aux pédales d'accélérateur dont le déplacement est mesuré électriquement et qui sont aujourd'hui de plus en plus utilisées dans les véhicules modernes.

La présente invention a pour objet un système pour générer une force sur une pédale de commande d'un organe de réglage de moteur thermique de véhicule automobile qui remédie à ces inconvénients.

Ce but est atteint dans un système ci-précite par le fait que l'actionneur est un vérin à dépression et que la force exercée sur la pédale ne dépend que, à un facteur de proportionnalité près, de la pression dans le vérin.

En effet, le mécanisme de transmission est extrêmement simple. Il est constitué exclusivement de deux biellettes, à l'exclusion de ressorts ou autres moyens élastiques. L'effort du vérin est donc transmis instantanément, avec la même intensité (à un facteur multiplicatif près), à la pédale de commande. On peut donc, selon l'invention, exercer une force, de rappel, complètement réglable puisqu'elle ne dépend que de la pression dans le vérin, laquelle peut être programmée selon une loi choisie : variation continue, rampe régulière, etc.

La force exercée sur la pédale est une force de rappel qui la sollicite vers sa position relâchée. Par ailleurs, le terme "force" doit être compris comme signifiant également "couple". En effet, en pratique, le système agit sur une biellette solidaire de l'axe de la pédale, ce qui se traduit par un couple, par exemple un couple de rappel, exercé sur cette pédale.

Le vérin à dépression comporte avantageusement un organe de séparation, par exemple un piston ou une membrane, qui sépare une chambre en dépression reliée à une source de vide par une canalisation d'aspiration et une chambre atmosphérique mise à la pression atmosphérique.

La pression dans la chambre en dépression est de préférence régulée par un clapet de régulation situé sur la canalisation d'aspiration et par un clapet de mise à l'atmosphère apte à mettre la chambre en dépression en communication avec l'atmosphère, le clapet de régulation et le clapet de mise à l'atmosphère étant asservis par l'unité de pilotage. La canalisation d'aspiration peut être reliée au collecteur d'admission du moteur thermique ou à une pompe à vide électrique ou mécanique.

Avantageusement, le système comporte une chambre tampon interposée entre le clapet de régulation situé sur la canalisation d'aspiration et la source de vide. Alors, la pression dans la chambre tampon peut être régulée par un clapet de régulation situé sur la canalisation d'aspiration entre la chambre tampon et la source de vide.

Le système comporte de préférence, mais de manière non impérative, un capteur de mesure de la position de la pédale qui fournit à l'unité de pilotage un signal représentatif de cette position.

Dans une réalisation, un effort supérieur à la force exercée par le système pour le maintien de la pédale en position constante fournit à l'unité de pilotage un signal qui désactive l'application de la force sur la pédale.

D'autres caractéristiques et avantages de l'invention apparaîtront encore à la lecture de la description qui suit d'exemples de réalisation donnés à titre illustratif en référence aux figures annexées. Sur ces figures :
- la figure 1 est une vue schématique d'un premier mode de réalisation de système conforme à l'invention ;
- la figure 2 est une vue schématique d'une variante améliorée du mode de réalisation représenté sur la figure 1.

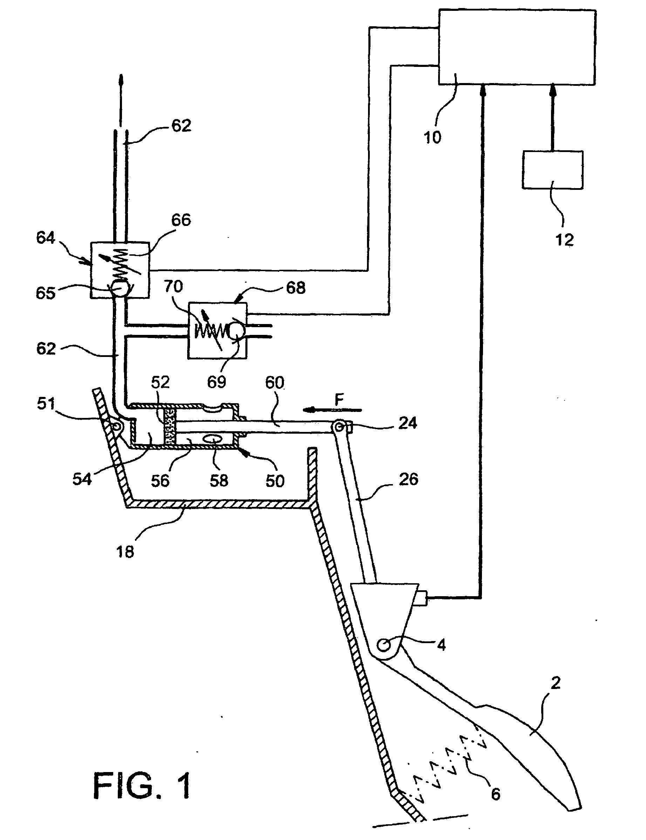

Sur la figure 1, la référence 2 désigne une pédale de commande d'un organe de réglage de la puissance du moteur thermique du véhicule sur lequel le système d'aide à la conduite de l'invention est monté. Cet organe de réglage peut être un papillon de réglage de l'admission d'air dans les chambres du moteur thermique ou une pompe d'injection de carburant. La pédale 2, aussi appelée pédale d'accélérateur, est montée pivotante sur le véhicule automobile autour d'un axe 4. Un ressort de rappel 6, schématiquement représenté, rappelle la pédale dans sa position de repos.

Le système comprend par ailleurs une unité de pilotage électronique 10. Cette unité peut être spécifique au système de l'invention ou être une unité déjà présente sur le véhicule automobile. L'unité de pilotage 10 reçoit des informations sur le véhicule automobile et sur son environnement d'un ensemble de capteurs 12, par exemple la vitesse du véhicule ou la distance séparant le véhicule automobile d'un autre véhicule automobile qui le précède. L'unité de pilotage 10 reçoit également des capteurs 12 un signal de position de la pédale d'accélérateur 2. Le signal de position de la pédale d'accélérateur peut être utilisé pour piloter également l'organe de réglage de la puissance du moteur thermique du véhicule automobile. Ou bien, l'organe de réglage peut être commandé classiquement par un câble.

Enfin, le système comprend un vérin pneumatique 50 articulé sur le tablier 18 par une rotule ou un pivot 51. Dans l'exemple, ce vérin est un vérin à dépression. Il comporte un piston 52 qui délimite une chambre en dépression 54 reliée à une source de vide et une chambre 56 mise à la pression atmosphérique par des trous 58. Une biellette 60 possède une extrémité solidaire du piston 52 et une autre extrémité articulée en 24 sur une biellette 26 solidaire de l'axe 4 de la pédale d'accélérateur 2. Une traction exercée sur la biellette 60 dans le sens de la flèche F permet de créer une force de rappel sur la pédale. Cette force de rappel s'ajoute à la force de rappel, toujours présente, du ressort de rappel 6.

La source de vide (non représentée) peut être constituée classiquement par le collecteur d'admission du moteur. Elle peut également être constituée par une pompe à vide, notamment dans le cas des moteurs diesels. La chambre 54 est reliée à la source de vide par une canalisation d'aspiration 62. Un clapet de régulation 64 monté sur la canalisation 62 et un clapet de mise à l'atmosphère 68 permettent de réguler la pression dans la chambre 54. Le clapet de régulation est représenté par une bille 65 plaquée sur un siège par un ressort 66. De même, le clapet de mise à l'atmosphère est représenté par une bille 69 plaquée sur un siège par un ressort 70. Pour augmenter la dépression dans la chambre 54, on la met en communication avec la source de vide par le clapet 64. Au contraire, si l'on veut la faire chuter, il suffit d'admettre de l'air par une mise à l'atmosphère. Les clapets de régulation 64 et de mise à l'atmosphère 68 sont pilotés par l'unité de pilotage électronique 10 en fonction de la force (du couple), par exemple de la force de rappel, à exercer sur la pédale 2.

Comme on le constate, la chaîne de transmission est simple et très courte. Cela permet à la force de suivre avec précision les variations imposées par l'unité de pilotage électronique 10. Cette relation simple autorise une très grande diversité de lois de force de rappel. Le système permet d'obtenir des temps de réaction courts et une bonne précision sur la valeur de la force de rappel. De plus, il consomme très peu d'énergie.

En outre, comme on l'a rappelé, il est compatible avec les pédales d'accélérateur sans câble, de plus en plus utilisées actuellement.

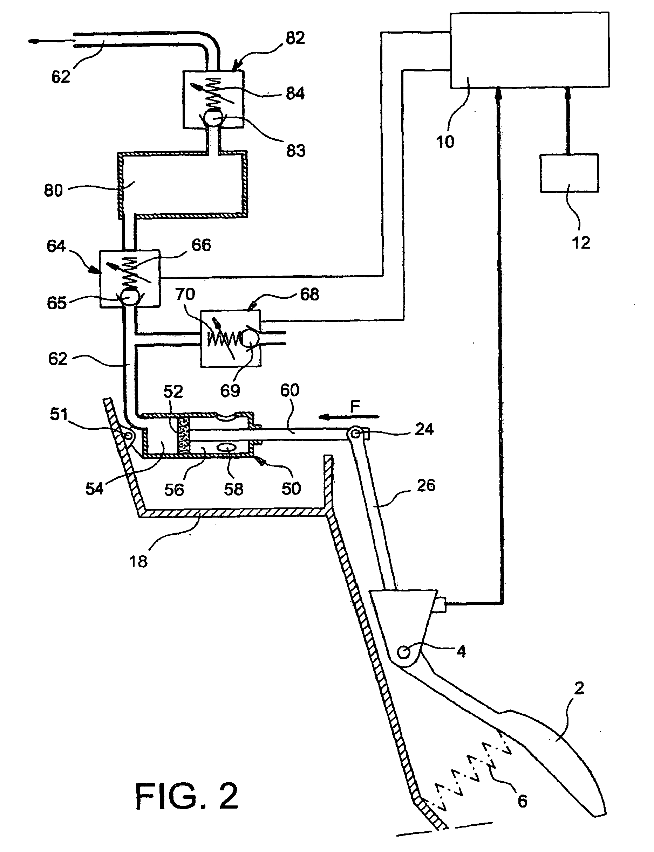

On a représenté sur la figure 2 une variante du système de la figure 1. Il s'en distingue par la présence d'une chambre tampon 80 interposée entre le clapet de régulation 64 situé sur la canalisation d'aspiration 62 et la source de vide. Son rôle est de constituer un réservoir d'air de dépression stable. Elle est utile dans le cas où le débit de la source de vide n'est pas stable dans le temps, par exemple lorsqu'il dépend des variations du régime moteur. La pression dans la chambre tampon est régulée par un clapet de régulation 82 situé sur la canalisation d'aspiration 62 entre la chambre tampon 80 et la source de vide. Ce clapet est un simple clapet antiretour qui comporte une bille 83 plaquée sur un siège par un ressort 84. Il empêche l'admission d'air à une pression supérieure à la dépression de chambre tampon. En variante, ce clapet pourrait être piloté par l'unité de pilotage électronique 10.

## Revendications

1. Système pour générer une force sur une pédale de commande d'un organe de réglage de la puissance délivrée par un moteur thermique de véhicule automobile comprenant un actionneur ; un mécanisme de transmission (60, 26) qui relie l'actionneur à l'organe de réglage de la puissance du moteur thermique pour exercer une force sur cet organe;une unité de pilotage (10) qui reçoit des informations pour asservir l'actionneur en fonction de la force à exercer sur la pédale de commande l'organe de réglage de la puissance délivrée par le moteur thermique, **caractérisé en ce que** l'actionneur est un vérin à dépression (50) et **en ce que** la force exercée sur la pédale ne dépend que, à un facteur de proportionnalité près, de la pression dans le vérin (50).

2. Système selon la revendication 1, **caractérisé en ce que** le vérin à dépression (50) comporte un organe de séparation (52) qui sépare une chambre en dépression (54) reliée à une source de vide par une canalisation d'aspiration (62) et une chambre atmosphérique (56) mise à la pression atmosphérique.

3. Système selon l'une des revendications 1 ou 2, **caractérisé en ce que** la pression dans la chambre en dépression est régulée par un clapet de régulation (64) situé sur la canalisation d'aspiration et par un clapet de mise à l'atmosphère apte à mettre la chambre en dépression en communication avec l'atmosphère, le clapet de régulation (64) et le clapet de mise à l'atmosphère (68) étant asservis par l'unité de pilotage.

4. Système selon l'une des revendications 1 à 3, **caractérisé en ce que** la canalisation d'aspiration (62) est reliée au collecteur d'admission du moteur thermique.

5. Système selon l'une des revendications 1 à 3, **caractérisé en ce que** la canalisation d'aspiration est reliée à une pompe à vide électrique ou mécanique.

6. Système selon l'une des revendications 1 à 5, **caractérisé en ce qu'**il comporte une chambre tampon (80) interposée entre le clapet de régulation (64) situé sur la canalisation d'aspiration et la source de vide.

7. Système selon la revendication 6, **caractérisé en ce que** la pression dans la chambre tampon (80) est régulée par un clapet de régulation (64) situé sur la canalisation d'aspiration entre la chambre tampon (80) et la source de vide.

8. Système selon l'une des revendications 1 à 7, **caractérisé en ce qu'**il comporte un capteur (14) de mesure de la position de la pédale (2) qui fournit à l'unité de pilotage un signal représentatif de cette position.

9. Utilisation d'un système pour générer une force sur une pédale de commande selon l'une des revendications 1 à 8, **caractérisé en ce que** le système exerce une force apte à maintenir la pédale en position constante, et ce qu'un effort supérieur à cette force exercée par le système pour le maintien de la pédale en position constante fournit à l'unité de pilotage (10) un signal qui désactive l'application de la force sur la pédale (2).

## Claims

1. System for generating a force on a control pedal of a device for adjusting the power delivered by a heat engine of a motor vehicle comprising an actuator; a transmission mechanism (60, 26) which connects the actuator to the device for adjusting the power of the heat engine in order to apply a force on that device; a control unit (10) which receives data for controlling the actuator as a function of the force to be applied on the control pedal of the device for adjusting the power delivered by the heat engine, **characterized in that** the actuator is a vacuum jack (50) and **in that** the force applied on the pedal depends, except for a factor of proportionality, only on the pressure in the jack (50).

2. System according to Claim 1, **characterized in that** the vacuum jack (50) comprises a separating device (52) which separates a vacuum chamber (54), connected to a vacuum source by an intake ducting (62), from an atmospheric chamber (56) placed at atmospheric pressure.

3. System according to one of Claims 1 or 2, **characterized in that** the pressure in the vacuum chamber is regulated by a regulating valve (64) located on the intake ducting and by a valve for placing at atmospheric pressure able to put the vacuum chamber in contact with the atmosphere, the regulating valve (64) and the valve for connecting with the atmosphere (68) being controlled by the control unit.

4. System according to one of Claims 1 to 3, **characterized in that** the intake ducting (62) is connected to the intake manifold of the heat engine.

5. System according to one of Claims 1 to 3, **characterized in that** the intake ducting is connected to an electrical or mechanical vacuum pump.

6. System according to one of Claims 1 to 5, **characterized in that** it comprises a buffer chamber (80) interposed between the regulating valve (64), located on the intake ducting, and the vacuum source.

7. System according to Claim 6, **characterized in that** the pressure in the buffer chamber (80) is regulated by a regulating valve (64) located on the intake ducting between the buffer chamber (80) and the vacuum source.

8. System according to one of Claims 1 to 7, **characterized in that** it comprises a sensor (14) for measuring the position of the pedal (2) which provides the control unit with a signal representing this position.

9. Use of a system for generating a force on a control pedal according to one of Claims 1 to 8, **characterized in that** the system applies a force able to maintain the pedal in a constant position, and **in that** a force greater than this force applied by the system for maintaining the pedal in a constant position supplies the control unit (10) with a signal which deactivates the application of the force on the pedal (2).

## Patentansprüche

1. System zur Erzeugung einer Kraft auf ein Steuerpedal eines Organs zur Regelung der von einem Kraftfahrzeug-Wärmemotor gelieferten Leistung, das einen Stellantrieb, einen Übertragungsmechanismus (60, 26), der den Stellantrieb mit dem Organ zur Regelung der Leistung des Wärmemotors verbindet, um eine Kraft auf dieses Organ auszuüben, und eine Steuereinheit (10) aufweist, die Informationen empfängt, um den Stellantrieb in Abhängigkeit von der auf das Steuerpedal des Organs zur Regelung der vom Wärmemotor gelieferten Leistung auszuübenden Kraft zu steuern, **dadurch gekennzeichnet, dass** der Stellantrieb ein Unterdruckzylinder (50) ist, und dass die auf das Pedal ausgeübte Kraft bis auf einen Proportionalitätsfaktor nur vom Druck im Zylinder (50) abhängt.

2. System nach Anspruch 1, **dadurch gekennzeichnet, dass** der Unterdruckzylinder (50) ein Trennorgan (52) aufweist, das eine Unterdruckkammer (54), die über eine Saugleitung (62) mit einer Vakuumquelle verbunden ist, von einer auf Luftdruck befindlichen Luftkammer (56) trennt.

3. System nach einem der Ansprüche 1 oder 2, **dadurch gekennzeichnet, dass** der Druck in der Unterdruckkammer von einem Regelventil (64), das sich auf der Saugleitung befindet, und von einem Entlüftungsventil reguliert wird, das in der Lage ist, die Unterdruckkammer mit der Luft zu verbinden, wobei das Regelventil (64) und das Entlüftungsventil (68) von der Steuereinheit gesteuert werden.

4. System nach einem der Ansprüche 1 bis 3, **dadurch gekennzeichnet, dass** die Saugleitung (62) mit dem Einlasskollektor des Wärmemotors verbunden ist.

5. System nach einem der Ansprüche 1 bis 4, **dadurch gekennzeichnet, dass** die Saugleitung mit einer elektrischen oder mechanischen Vakuumpumpe verbunden ist.

6. System nach einem der Ansprüche 1 bis 5, **dadurch gekennzeichnet, dass** es eine Pufferkammer (80) aufweist, die zwischen das auf der Saugleitung befindliche Regelventil (64) und die Vakuumquelle eingefügt ist.

7. System nach Anspruch 6, **dadurch gekennzeichnet, dass** der Druck in der Pufferkammer (80) von einem Regelventil (64) reguliert wird, das sich auf der Saugleitung zwischen der Pufferkammer (80) und der Vakuumquelle befindet.

8. System nach einem der Ansprüche 1 bis 7, **dadurch gekennzeichnet, dass** es einen Sensor (14) zur Messung der Position des Pedals (2) aufweist, der der Steuereinheit ein für diese Position repräsentatives Signal sendet.

9. Verwendung eines Systems zur Erzeugung einer Kraft auf ein Steuerpedal nach einem der Ansprüche 1 bis 8, **dadurch gekennzeichnet, dass** das System eine Kraft ausübt, die in der Lage ist, das Pedal in konstanter Position zu halten, und dass eine Krafteinwirkung, die größer ist als diese vom System zum Halt des Pedals in konstanter Position ausgeübte Kraft, an die Steuereinheit (10) ein Signal liefert, das die Anwendung der Kraft auf das Pedal (2) deaktiviert.
